# EUROPEAN PATENT APPLICATION

(11) **EP 0 978 741 A1**
(43) Date of publication of application: **09.02.2000**
(21) Application number: 99305885.8
(22) Date of filing: 26.07.1999
(51) Int. Cl.: G02B 6/38, G02B 6/36, B23K 26/00

(54) **Method of making ferrule connectors for optical fibers**

(30) Priority: 03.08.1998 US 128498
(71) Applicant: LUCENT TECHNOLOGIES INC., Murray Hill, New Jersey 07974-0636 (US)
(72) Inventor: Ahrens, Robert George, Chatham, New Jersey 07928 (US); Presby, Herman Melvin, Highland Park, New Jersey 08904 (US)
(74) Representative: Johnston, Kenneth Graham

(57) **Abstract**

A method for making optical fiber ferrules with bevels (17) and/or notches (19) thereon is disclosed. The bevels (17) and/or notches (19) are formed on the optical fiber ferrule with a laser (190). Forming bevels and/or notches with the laser permits the manufacture of optical fiber ferrules using materials less expensive than ceramic such as glass.

## Description

### 1. Field of the Invention

The present invention relates to optical fiber ferrule assemblies, and more particularly, to ferrule assemblies useful as connectors for optical fibers.

### 2. Description of the Related Art

Most optical communication arrangements require, at some point, the coupling of an optical fiber to an optical device such as a laser, a light emitting diode (LED), a photodiode, or another optical fiber. In many optical communication arrangements, an end portion of the optical fiber is enclosed within a housing, called a ferrule. The ferrule provides support for the end portion of the optical fiber, making optical fibers so enclosed easier to pick up and/or handle as well as generally forming part of an optical fiber connector.

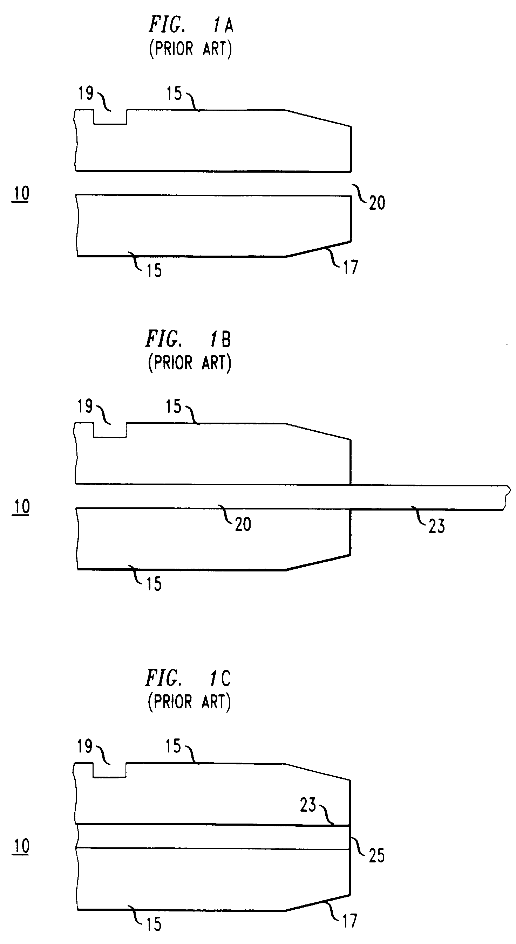

A cut away view of a ferrule **10** useful for supporting the end portion of optical fibers is shown in FIG. 1A. The ferrule **10** has an elongated body **15** with a bore **20** extending axially therethrough. An optical fiber **23** is inserted into the bore **20** so it protrudes from the ferrule **10,** as shown in the cut away view of FIG. 1B. The protruding end of the optical fiber **23** is then cleaved and the ferrule **10** prepared for coupling with an optical device. The ferrule **10** is prepared for coupling with the optical device by grinding and polishing the optical fiber **23** to provide a flat end face **25** that is flush with the end of the ferrule **10,** as shown in the cut away view of FIG. 1C.

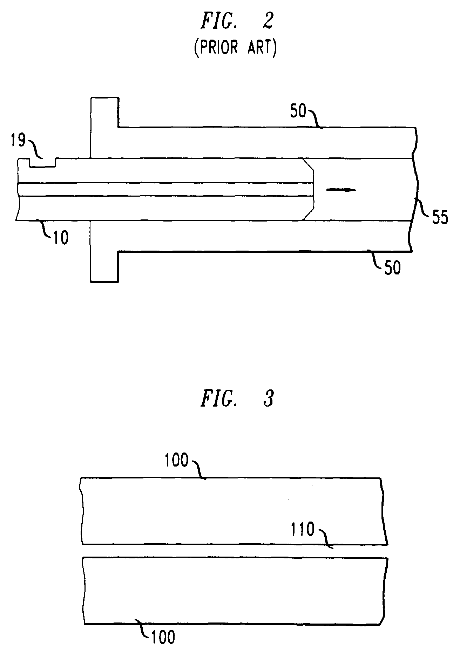

Typically, a portion of one end **17** of the ferrule **10** is beveled, as illustrated in Figs. 1A-C. Ferrules which have a portion of one end that is beveled are easier to align with connectors housing optical devices. For example, a cut away view showing a portion of an optical connector **50** useful for housing an optical device (not shown) is depicted in FIG. 2. The optical connector **50** includes a sleeve **55** into which the ferrule **10** is inserted for coupling with the optical device (not shown). As shown in FIG. 2, it is easier to insert the ferrule **10** in the sleeve **55** for alignment with the optical device when a portion of one end **17** of the ferrule is beveled.

In many applications the ferrule is over-molded at the end opposite the bevel. The over-molding material holds the ferrule in a connector assembly. The over-molding material is typically made of plastic.

Many ferrules **10** are made of materials which provide a smooth, polished outer surface on the elongated body. Such ferrules typically have at least one notch **19** formed in a portion of the side of the elongated body **15**. The notch **19** formed in the portion of the side of the ferrule is desirable because it provides an area on the smooth, polished outer surface of the elongated body to which the over-molding material can adhere.

Some ferrules useful for supporting the end portion of the optical fiber are made of ceramic materials such as aluminum oxide. Ceramic ferrules are typically made with a molding process. In the molding process, a mold having the exact dimensions of the ferrule (including the beveled portion and the notch) is filled with ceramic material and hardened. While molding processes produce ceramic ferrules having beveled ends and notches, the ceramic materials and the molds used for forming such ferrules are expensive.

Ferrules are also made of glass in an attempt to reduce the costs associated with their manufacture. For ferrules made of glass, the beveled portion at one end of the ferrule and the notch are typically formed mechanically by grinding the outer surface of the ferrule. However, most grinding processes are abrasive, forming cracks and chips on the beveled portion of the ferrule and in the notch.

Thus, methods for making ferrules which have beveled ends and notches continue to be sought.

### Summary of the Invention

The present invention is directed toward a method for making optical fiber ferrules with bevels and/or notches thereon. The bevels and/or notches are formed on the optical fiber ferrule with a laser. Beveling and/or notching the optical fiber ferrule with the laser permits the manufacture of ferrules from materials (e.g., glass) that are less expensive than ceramic materials.

In the present invention, an elongated body having a bore extending axially therethrough is provided. The elongated body is made of a material that is suitable for optical fiber ferrules such as glass.

The elongated body is rotated around its axis on which the mid-point for the diameter of the elongated body is located. Rotating the elongated body around its axis as the bevels and/or notches are formed, aligns the bevels and/or notches with respect to the mid-point of the elongated body. That is, for a given circumferance on the surface of the bevel and/or notch, each point is equidistant from the mid-point of the elongated body.

The speed of rotation is less than about 100 revolutions per minute (rpm). Rotation speeds greater than about 100 rpm are undesirable because the elongated body potentially wobbles. When the elongated body wobbles, points on the circumferance thereof are not equidistant from the axis.

As the elongated body is rotated, a laser beam is directed on an outer surface thereof, removing a portion of the outer surface of the elongated body. Directing the laser beam on the outer surface of the elongated body shapes the surface thereof, forming bevels and/or notches at desired locations along its length. The laser is preferably operated at an output power of less than about 25 watts and with a beam width less than about 250 microns. Such a laser output power and beam width is sufficient to shape portions of the outer surface forming bevels and/or notches in the elongated body without affecting other dimensions thereof (e.g., bore diameter). An example of a laser suited for shaping portions of the elongated body includes a carbon dioxide (CO₂) laser.

The laser is operated using a pulsed-mode. In the pulsed-mode, the laser periodically emits light pulses. The light pulses are emitted at a frequency of at least 90 Hz (hertz). Light pulses emitted at frequencies less than about 90 Hz introduce excessive heat into the ferrule which can adversely affect the shape of bevels and/or notches formed on the surface of the elongated body.

During notch formation, the pulsed-mode laser is preferably operated using a synchronized-mode. In the synchronized-mode, the laser on/off cycle is matched to the rotation of the elongated body so the laser periodically emits light pulses at specified times as the elongated body rotates.

Portions of the elongated body are shaped by moving the laser beam axially relative to the elongated body. Initially the elongated body is shaped by focusing the pulsed laser beam on a portion of the outer surface of the elongated body, ablating it. Thereafter, other portions of the elongated body are ablated by moving the laser axially relative to the elongated body. The axial movement enables the laser beam to be directed onto any portion of the elongated body.

The laser moves axially relative to the elongated body with a speed less than about 10 millimeters/second (mm/s). Moving the laser and the elongated body laterally relative to one another with speeds greater than 10 mm/s ablates the elongated body unevenly forming bevels and/or notches that are misaligned with respect to the mid-point of the elongated body.

Additionally, the taper of the bevels and/or the depth of the notches are controlled by focusing the laser beam at points located within the elongated body. The points are selected relative to the mid-point of the elongated body. Focusing the laser beam at points located within the elongated body enables ablation of portions of the elongated body with any taper or to any depth.

After the elongated body is beveled and/or notched, it is cleaved at predetermined lengths to form the optical fiber ferrules. The elongated body is cleaved using conventional methods such as a saw.

Other objects or features of the present invention will become apparent from the following detailed description considered in conjunction with the accompanying drawings. It is to be understood, however, that the drawings are designed solely for purposes of illustration and do not serve to limit the invention, for which reference should be made to the appended claims.

### Brief Description of the Drawings

FIG. 1A shows a cut away view of an optical fiber ferrule typically used for supporting an end of an optical fiber;
FIG. 1B depicts an optical fiber protruding from the end of the optical fiber ferrule;
FIG. 1C shows a flat end face on the optical fiber that is flush with the end of the optical fiber ferrule;
FIG. 2 shows a cut away view of the optical fiber ferrule inserted in a sleeve of an optical connector;
FIG. 3 depicts a portion of an elongated body having a bore extending axially therethrough;
FIG. 4 illustrates the method of the present invention wherein a motorized chuck rotates the elongated body while a laser forms a bevel and/or at least one notch thereon;
FIG. 5A depicts an elongated body with bevels and notches thereon formed according to the method of the present invention; and
FIG. 5B depicts an optical fiber ferrule which includes a beveled end and notches formed by cleaving the elongated body shown in FIG. 5A.

### Detailed Description

The present invention is directed to a method for making optical fiber ferrules having bevels and/or notches thereon. The bevels and/or notches are formed on the optical fiber ferrule with a laser. Beveling and/or notching the optical fiber ferrule using the laser permits the manufacture of ferrules from materials that are less expensive than ceramic materials. An example of a material less expensive than ceramic includes glass.

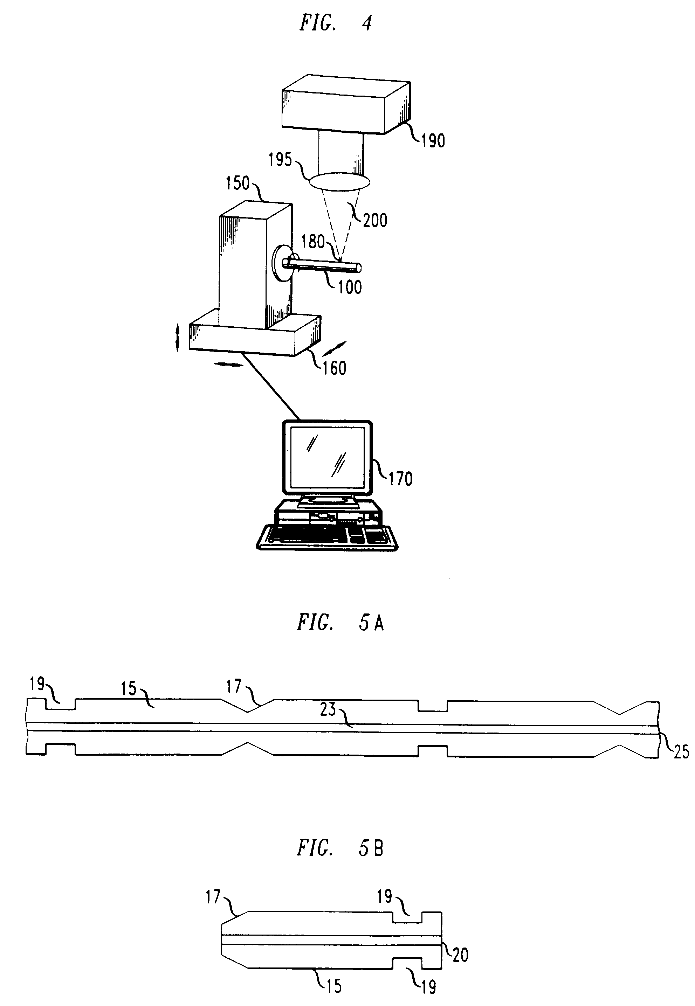

In the present invention, an elongated body **100** having a bore **110** extending axially therethrough is provided, as shown in FIG. 3. The elongated body **100** is made of a material suited for use as an optical fiber ferrule such as Pyrex glass.

The elongated body is rotated around its axis. The axis of the elongated body also identifies the mid-point for the diameter thereof. The elongated body **100** is rotated using an arrangement such as the arrangement shown in FIG. 4. FIG. 4 depicts one end of the elongated body **100** mounted in a motorized chuck **150**. The motorized chuck **150** is affixed to an X-Y-Z translation stage **160**. A computer **170** controls the movement of the X-Y-Z translation stage **160**.

The motorized chuck **150** rotates the elongated body **100** around its axis. Rotating the elongated body around its axis as the bevels and/or notches are formed, aligns the bevels and/or notches with respect to the mid-point of the elongated body. That is, for a given circumferance on the surface of the bevel and/or notch, each point is equidistant from the mid-point of the elongated body. For example, when the bevels and/or notches are formed along the length of the elongated body, a laser beam is initially focused on the outer surface thereof. If the elongated body is not rotated around its center-line, the laser beam is focused at a point in space above the outer surface of the body or at a point in space below the outer surface of the elongated body, forming bevels and/or notches that are misaligned with respect to the mid-point of the elongated body. It is more difficult to insert ferrules in connectors housing optical devices when the bevels and/or notches are misaligned with respect to the midpoint of the elongated body.

The speed of rotation is less than about 100 revolutions per minute (rpm). Rotation speeds greater than about 100 rpm are undesirable because the elongated body potentially wobbles. When the elongated body wobbles, points on the circumferance thereof are not equidistant from the axis.

As the elongated body is rotated, a laser beam is directed on an outer surface thereof, removing a portion of the outer surface of the elongated body. Directing the laser beam on the outer surface of the elongated body shapes the surface thereof, forming bevels and notches at desired locations along its length, as shown in FIG. 4. The laser **190** is operated at an output power of less than about 25 watts with a beam width less than about 250 microns. Such a range for the laser output power and beam width is sufficient to shape portions of the outer surface forming bevels and/or notches in the elongated body without affecting other dimensions (e.g., bore diameter) thereof. An example of a laser suited for forming the bevels and/or notches on an elongated body made of glass includes a carbon dioxide (CO₂) laser.

The laser **190** is operated using a pulsed-mode. In the pulsed-mode, the laser **190** periodically emits light pulses. The light pulses are emitted at a frequency of at least about 90 Hz (hertz). Emitting the light pulses at frequencies less than about 90 Hz excessively heats the elongated body affecting the shape of bevels and/or notches formed on the surface of the elongated body.

During notch formation, the laser **190** preferably operates in a synchronized-mode. In the synchronized-mode, the laser on/off cycle is matched to the rotation of the elongated body. Thus, the laser periodically emits light beams at specified times as the elongated body is rotated. For example, the laser on/off cycle is programmable to emit light beams only during the first 90 degrees of rotation for the elongated body, producing a notch in only a portion of the surface thereof which corresponds to the first 90 degrees of rotation.

Portions of the elongated body **100** are shaped by moving the laser beam **200** axially relative to the elongated body or vice versa. Initially, the elongated body **100** is shaped by focusing the pulsed laser beam on a portion of the outer surface of the elongated body, ablating it. Thereafter, other portions of the elongated body **100** are ablated by moving the laser axially relative to the elongated body. The axial movement enables the laser beam to be directed onto any portion of the elongated body.

In one embodiment, the elongated body **100** moves axially relative to the laser **190** using the X-Y-Z translation stage **160**. The X-Y-Z translation stage **160** under the control of computer **170** moves the elongated body **100** axially relative to the laser **190** with a speed less than about 10 millimeters/second (mm/s). Moving the elongated body axially relative to the laser with speeds greater than 10 mm/s ablates the elongated body unevenly forming bevels and/or notches that are misaligned with respect to the mid-point thereof.

Additionally, the taper of the bevels and/or the depth of the notches are controlled by focusing the laser beam **200** at points located within the elongated body **100**. The points are selected relative to the mid-point of the elongated body. The laser beam **200** is focused at points located within the elongated body **100** using focusing lenses **195** and the X-Y-Z translation stage **160**. Focusing the laser beam at points located within the elongated body enables ablation of portions of the elongated body with any taper or to any depth. For example, on a glass body having a diameter of about 1.25 mm, focusing a laser beam with a beam width of about 200 microns on the surface of the glass body forms a notch that is about 400 microns deep and 300 microns wide.

After the elongated body is beveled and/or notched, as shown in FIG. 5A, it is cleaved at predetermined lengths to form the optical fiber ferrules. The elongated body is cleaved using conventional methods such as a saw. An optical fiber ferrule having bevels **200** and notches **250** formed along its length is illustrated in FIG. 5B.

The following examples are provided to illustrate specific embodiments of the present invention.

### Example 1

About a 25 mm length of 1.25 mm diameter glass rod was cut from glass ferrule stock with a saw. The glass rod had a bore extending axially therethrough. The glass ferrule stock was made of Pyrex glass.

One end of the 25 mm long glass rod was loaded in a lathe head. The lathe head was mounted on an X-Y-Z translation stage. The lathe head rotated the 1.25 mm diameter glass rod at a speed of about 50 rpm.

A CO₂ laser beam was focused on the outer surface of the 1.25 mm diameter glass rod ablating a portion thereof. The CO₂ laser was operated in a pulsed-mode with an output power of about 20 watts. The laser was pulsed at a frequency of about 200 Hz and had a beam width of about 200 µm. Such an output power, frequency and beam width ablated a volume of the glass rod about 250 µm x 250 µm x 400 µm. Using the X-Y-Z translation stage, the 1.25 mm diameter glass rod was indexed about 300 µm in the X direction, so the CO₂ laser beam was focused on and ablated a different portion of the glass rod. The glass rod was continuously indexed in the X direction ablating a length about 1.0 mm long. After ablating the 1.0 mm length, the glass rod was repositioned to its starting point and then indexed about 300 µm in the X direction and 500 µm in the Z direction, so the CO₂ laser beam ablated a different portion of the glass rod while forming a tapered surface. Thereafter, the 1.25 mm diameter glass rod was continuously indexed and portions ablated until a 30 degree bevel having a diameter of about 0.60 mm at its narrowest point was formed.

The lathe head with the 1.25 mm diameter glass rod therein was advanced about 6.0 mm relative to the 30 degree bevel using the X-Y-Z translation stage. The CO₂ laser in a synchronized-mode ablated a portion of the surface of the 1.25 mm diameter glass rod forming notches therein. The CO₂ laser was operated with an output power of about 20 watts. The CO₂ laser on/off cycle was programmed to emit light beams during the first and third 90 degrees of rotation for the glass rod, producing two opposing notches in the surface of the glass rod. The light beams had widths of about 200 µm and were focused on the surface of the glass rod. The light beam ablated a portion of the glass rod forming notches about 250 µm wide and about 300 µm deep. Using the X-Y-Z translation stage, the 1.25 mm diameter glass rod was indexed about 300 µm in the X direction, so the CO₂ laser beam was focused on and ablated a different portion of the glass rod. The 1.25 mm diameter glass rod was continuously indexed in the X direction and portions ablated until notches having a width of about 0.5 mm and a depth of about 300 µm were formed. After ablating the 0.5 mm length, the glass rod was repositioned to its starting point and then indexed about 500 µm in the Z direction, so the CO₂ laser beam ablated a different portion of the glass rod forming deeper notches in the surface thereof. The 1.25 mm diameter glass rod was continuously indexed and portions ablated until notches 0.5 mm and 0.2 mm deep were formed.

After the bevel and notches were formed in the 1.25 mm diameter glass rod, it was removed from the lathe head. The 1.25 mm glass rod was then cleaved to form an optical fiber ferrule with a length of about 6.4 mm. A first cleave was made through the beveled portion of the glass rod. A second cleave was made about 6.4 mm from the first cleave thereby forming the optical fiber ferrule with a beveled end and two notches.

### Example 2

About a 25 mm length of 1.25 mm diameter glass rod was cut and mounted in a lathe head as described in Example 1. The lathe head rotated the 1.25 mm diameter glass rod at a speed of about 50 rpm.

A bevel and two notches were formed in the 1.25 mm diameter glass rod using the same conditions described in Example 1. However, during bevel and notch formation, instead of indexing the glass rod in the X direction using steps which were about 300 µm long, the glass rod was continuously moved axially relative to the CO₂ laser at a speed of about 1 mm/s.

After the bevel and notches were formed in the 1.25 mm diameter glass rod, it was removed from the lathe head and cleaved as described in Example 1.

## Claims

1. A method for making an optical fiber ferrule, comprising the steps of:
providing an elongated body with a bore extending axially therethrough;
rotating the elongated body;
directing a laser beam onto the rotating elongated body thereby removing at least a portion of an outer surface of the elongated body whereby the remaining portion of the outer surface of the elongated body has a shape; and
cleaving the elongated body at predetermined lengths to form an optical fiber ferrule.

2. The method of claim 1 wherein the remaining portion of the outer surface of the elongated body has a beveled shape.

3. The method of claim 1 wherein the remaining portion of the outer surface of the elongated body has at least one notch therein.

4. The method of claim 1 wherein the laser has a beam diameter less than about 250 µm.

5. The method of claim 1 wherein the elongated body is rotated with a rate of less than about 100 revolutions per minute (rpm).

6. The method of claim 1 further comprising changing the position of the laser along the axis of the elongated body as the laser is directed onto the portion of the outer surface of the elongated body.

7. The method of claim 6 wherein the position of the laser along the axis of the elongated body changes at a speed less than about 10 millimeters/second.

8. The method of claim 6 wherein the laser has a beam diameter less than about 150 microns.

9. The method of claim 1 wherein the laser is either operated in a pulsed-mode, or in a synchronized-mode, or is a carbon dioxide (CO₂) laser.

10. The method of claim 1 wherein the elongated body is made of glass.
